# EUROPEAN PATENT SPECIFICATION

(11) **EP 4 386 553 B1**
(45) Date of publication and mention of the grant of the patent: **12.08.2026**
(21) Application number: 23212787.8
(22) Date of filing: 28.11.2023
(51) Int. Cl.: G06F 9/50

(54) **HARDWARE MAPPING**
HARDWARE-ABBILDUNG
MAPPAGE DE MATÉRIEL

(30) Priority: 15.12.2022 GB 202218962
(43) Date of publication of application: 19.06.2024
(73) Proprietor: Imagination Technologies Limited, Kings Langley, Hertfordshire WD4 8LZ (GB)
(72) Inventor: THOMAS, William, Kings Langley, Hertfordshire, WD4 8LZ (GB); ELKHIDIR, Ahmed, Kings Langley, Hertfordshire, WD4 8LZ (GB)
(74) Representative: CMS Cameron McKenna Nabarro Olswang LLP

(56) References cited:
- EP-A1- 2 750 328
- WO-A1-2011/079942
- CN-A- 113 821 208

## Description

### Background

One of the functions that may be performed by a compiler is to map the basic operations requested by a program to the hardware arrangement on which it will be run, e.g. to the various pipelines provided in the hardware. The manner in which operations in a program, such as multiply or add, are mapped to hardware elements (e.g. within a pipeline) that perform the corresponding operation can affect the efficiency, power consumption and speed of operation of the program at run time (e.g. it can result in some hardware elements being under-used and bottlenecks elsewhere in the hardware).

The embodiments described below are provided by way of example only and are not limiting of implementations which solve any or all of the disadvantages of known methods of mapping programs to the hardware that will execute the program.

EP2750328 A1 describes a method of method of mapping software-based network functions to hardware resources included in a hardware resource pool, wherein the mapping is performed dynamically on unallocated resources of the hardware resource pool and based on at least the next information: specific hardware constraints for the supporting of each of said software-based network functions; network requirements of at least one defined networking service design for a service making use of said hardware resource pool and of at least part of said software-based network functions; and a hardware description of the hardware resources included in the hardware resource pool.

### Summary

The invention is set out in the appended set of claims.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A method of mapping a program to a hardware arrangement is described, the hardware arrangement comprising a plurality of interconnected hardware stages. The method comprises analysing the plurality of hardware stages in the hardware arrangement to generate, for each stage, a program-independent hardware description defining an operation performed by the stage and inputs and outputs of the stage. The program-independent hardware descriptions are then used when analysing the program to generate a non-overlapping set of mappings between groups of adjacent program primitive operations in the program and groups of interconnected hardware stages in the hardware arrangement. Having generated the non-overlapping set of mappings, the groups of adjacent program primitive operations are scheduled into an order for execution.

A first aspect provides a method of mapping a program to a hardware arrangement, the hardware arrangement comprising a plurality of interconnected hardware stages and the method comprising: analysing the plurality of hardware stages in the hardware arrangement to generate, for each stage, a program-independent hardware description defining an operation performed by the stage and inputs and outputs of the stage; analysing the program to generate a non-overlapping set of mappings between groups of adjacent program primitive operations in the program and groups of interconnected hardware stages in the hardware arrangement based on the program-independent hardware descriptions; and scheduling the groups of adjacent program primitive operations into an order for execution.

Analysing the program to generate a non-overlapping set of mappings between groups of adjacent program primitive operations in the program and groups of interconnected hardware stages in the hardware arrangement based on the program-independent hardware descriptions may comprise: for each program primitive operation in the program, using the program-independent hardware descriptions to generate one or more mappings between the program primitive operation and different compatible hardware stages in the hardware arrangement; generating a plurality of candidate group mappings, each candidate group mapping mapping a group of adjacent program primitive operations in the program to a group of interconnected hardware stages, by analysing inputs and outputs of the program primitive operations and hardware stages; filtering the plurality of candidate group mappings to generate a non-overlapping set of mappings.

Using the program-independent hardware descriptions to generate one or more mappings between the program primitive operation and different compatible hardware stages in the hardware arrangement may comprise: using the program-independent hardware descriptions to generate all possible mappings between the program primitive operation and different compatible hardware stages in the hardware arrangement.

Generating a plurality of candidate group mappings may comprise excluding group mappings for any circularly dependent group of adjacent program primitive operations.

Excluding group mappings for any circularly dependent group of adjacent program primitive operations may comprise: assigning an identifier to each primitive operation in the input program; for each operation, creating one or more bit vectors that encode information about each primitive operation linked to the operation through an input or output; for each group mapping, creating one or more producer bit vectors that identify primitive operations that provide inputs to the group and one or more consumer bit vectors that identify primitive operations that receive outputs from the group; and excluding group mappings where there is an overlap between producer and consumer bit vectors.

A program-independent hardware description for a hardware stage may define a number of inputs received by the hardware stage and/or a number of outputs generated by the hardware stage.

A program-independent hardware description for a hardware stage may define all inputs received by the hardware stage and/or all outputs generated by the hardware stage.

A program-independent hardware description for a stage may define a data format of each input and/or output.

A program-independent hardware description for a hardware stage may comprise a hierarchy of a pipeline description, one or more stage descriptions, one or more operation descriptions and a plurality of input/output masks, wherein the plurality of input/output masks are nested within the one or more operation descriptions, the one or more operation descriptions are nested within the one or more stage descriptions and the one or more stage descriptions are nested within the pipeline description.

Generating a plurality of candidate group mappings may comprise excluding group mappings that violate a hardware stage usage constraint defined in a stage description.

Filtering the plurality of candidate group mappings to generate a non-overlapping set of mappings may comprise filtering the plurality of candidate group mappings according to one or more pre-defined heuristics and using data defined in the pipeline description.

An operation description may comprise a plurality of input/output masks, the plurality of masks comprising a separate input mask corresponding to each possible way that data is routed to the operation and a separate output mask corresponding to each possible way that data is routed from an operation.

The method may further comprise, prior to analysing the plurality of hardware stages in the hardware arrangement to generate, for each stage, a program-independent hardware description: introducing one or more dummy stages (504) between hardware stages in the plurality of hardware stages, wherein a dummy stage comprises a dummy input stage, a dummy output stage or a dummy data duplicate stage.

The method may further comprise, prior to analysing the program to generate a non-overlapping set of mappings between groups of adjacent program primitive operations in the program and groups of interconnected hardware stages in the hardware arrangement: splitting a program operation in the program into a plurality of program primitive operations that collectively perform the first operation; and/or combining two or more program operations in the program into a program primitive operation that performs the combination of the two or more program operations.

The method may further comprise, storing the program-independent hardware descriptions for the hardware arrangement.

The method may further comprise, mapping a second program to the hardware arrangement, wherein mapping the second program to the hardware arrangement comprises: analysing the second program to generate a non-overlapping set of mappings between groups of adjacent program primitive operations in the second program and groups of interconnected hardware stages in the hardware arrangement based on the stored program-independent hardware descriptions; and scheduling the groups of adjacent program primitive operations in the second program into an order for execution.

The method may further comprise, executing the mapped groups of adjacent program primitive operations on the hardware arrangement.

A second aspect provides a computing-based device comprising: a processor; and a memory arranged to store computer executable instructions that when executed by the processor, cause the computing-based device to map a program to a hardware arrangement, the hardware arrangement comprising a plurality of interconnected hardware stages and the mapping comprising: analysing the plurality of hardware stages in the hardware arrangement to generate, for each stage, a program-independent hardware description defining an operation performed by the stage and inputs and outputs of the stage; analysing the program to generate a non-overlapping set of mappings between groups of adjacent program primitive operations in the program and groups of interconnected hardware stages in the hardware arrangement based on the program-independent hardware descriptions; and scheduling the groups of adjacent program primitive operations into an order for execution.

The memory may be further arranged to store the program-independent hardware descriptions and wherein the mapping further comprises: storing the program-independent hardware descriptions for the hardware arrangement in the memory.

The mapping may further comprise: outputting the ordered groups of adjacent program primitive operations to the hardware arrangement for execution on the hardware arrangement.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### Brief Description of the Drawings

Examples will now be described in detail with reference to the accompanying drawings in which:
FIG. 1 is a flow diagram showing the three stages of a mapping method;
FIG. 2 is a flow diagram showing the second stage of the method of FIG. 1 in more detail;
FIG. 3 shows a schematic diagram of a first example hardware arrangement and a control flow graph of a target program;
FIG. 4 shows a schematic diagram of a second example hardware arrangement and a control flow graph of a target program;
FIG. 5 shows further schematic diagrams of example hardware arrangements; and
FIG. 6 is a schematic diagram of an exemplary computing-based device which may be used to implement the methods described herein.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### Detailed Description

The following description is presented by way of example to enable a person skilled in the art to make and use the invention.

Embodiments will now be described by way of example only.

As described above, the manner in which basic operations in a program, such as multiply or add, are mapped to hardware elements that perform the corresponding operation can affect the efficiency, power consumption and speed of operation of the program at run time; however, determining a good or optimum mapping can be difficult and take time (e.g. in terms of computing effort). It will be appreciated that the mapping may need to be performed more than once for the same program if that program is to be run on multiple hardware arrangements and/or if the hardware is updated or changed.

Existing mapping methods may be categorised as either using a brute-force approach or a tailored pattern-matching approach. The brute-force approach involves testing large numbers of mappings to determine which of those mappings provides optimal performance (where the optimal performance will be defined based on one or more operational characteristics, such as UK-687392242.2 efficiency, speed and/or power consumption). This takes a long time (resulting in very long compile times, sometimes as long as several days) and uses large amounts of processing resources as a consequence. In contrast, the tailored pattern-matching approach requires creation of a handwritten pattern matching algorithm which is specific to a particular hardware arrangement, which is very resource intensive in terms of human input. Irrespective of the approach used, the mapping is specific to a particular hardware arrangement and has to be redone if the program is to be executed by different hardware or the hardware is changed in some way. For example, with programmable hardware (such as an FPGA), reprogramming may result in a new pipeline description and hence require that the mapping is performed again.

Described herein are improved methods of mapping a program to a hardware arrangement (e.g. a collection of hardware pipelines) that are more flexible, more scalable and more efficient than existing methods. The flexibility and efficiency are increased because the mapping process is performed in stages and aspects of the stages (and in some examples, the entire output from some stages) can be reused when mapping a second program to a hardware arrangement that has already been mapped to for a first program and/or when mapping a program to new or updated hardware. The scalability is increased because by splitting upon the method into stages, the search spaces within each stage are additive, rather than multiplicative. The methods described herein also do not require a human to generate new pattern matching code. The methods described herein result in a reduced compile time compared to a brute-force approach, particularly for large programs (e.g. large shaders) and/or complex pipelines and reduced engineering (human) time compared to a tailored pattern-matching approach. Furthermore, by dividing the mapping into stages, each stage can be independently optimized, resulting in improvements in performance.

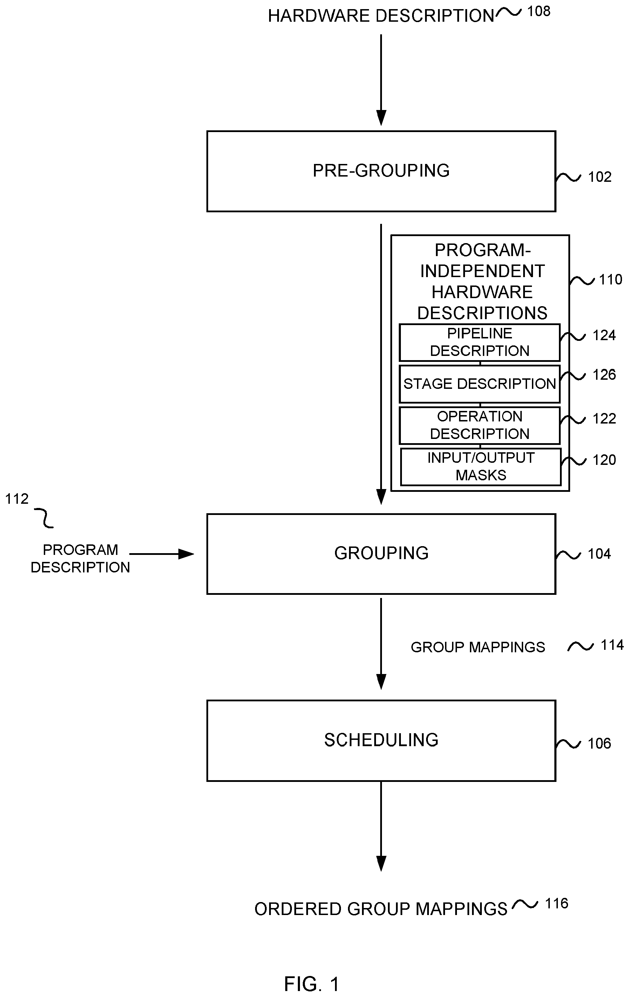

FIG. 1 is a schematic diagram showing the three stages of the mapping method: pre-grouping 102, grouping 104 and scheduling 106. The mapping method seeks to map a program, which may be referred to as the target program, to a hardware arrangement, which may be referred to as a target hardware arrangement. The target program may, for example, be a shader that is used in a graphics processing system and in such an example, the target hardware arrangement may be one or more graphics processing pipelines in the graphics processing system. In other examples the target program may be any other type of program.

The pre-grouping stage 102 finds a plurality of ways (e.g. all possible ways) that each individual stage in a target hardware arrangement could be used when executing any program. The pre-grouping stage 102 takes as an input a hardware description 108 of the target hardware arrangement and generates program-independent hardware descriptions 110 of each of the individual stages of the pipeline in the hardware arrangement, where a pipeline is a collection of hardware stages. These program-independent hardware descriptions 110 are described in more detail below. Each stage in a hardware arrangement corresponds to an operation that can be performed by a hardware unit within the hardware arrangement, e.g. multiply (MUL), add (ADD), absolute (ABS), multiply-add (MAD), negate (NEG), floor (FLR), saturate (SAT) which is a clamp in the range {0,1} and the hardware description defines the hardware stages and how they are connected (e.g. linked) together. These operations may be referred to as 'primitive operations' (or alternatively 'basic operations' or 'fundamental operations') as they are the building blocks that are used to perform more complex functions. For the purposes of this description, the term 'primitive operation' is used in two contexts: firstly it refers to these operations performed by hardware units and secondly in relation to a program description 112 (as described below) where it refers to the program instructions which correspond to the operations that are performed by the hardware units. Consequently in the former case these primitive operations may be referred to herein as 'hardware primitive operations' whereas in the latter case they may be referred to herein as 'program primitive operations'.

The grouping stage 104 takes as inputs the program-independent hardware descriptions 110 (generated in the pre-grouping stage 102) and a program description 112 of the target program. As noted above, the program-independent hardware descriptions 110 are generated without any knowledge or input in relation to the target program. The program-independent hardware descriptions 110 can therefore be generated ahead of when the mapping is performed. The program description 112 includes the program primitive operations and dependency information linking those program primitive operations and may, for example, be in the form of a control flow graph. As described in more detail below, the grouping stage 104 uses the program-independent hardware descriptions 110 to map the program primitive operations (i.e. the primitive operations in the target program) to compatible hardware stages and then performs grouping and filtering. The grouping stage 104 outputs a set of non-overlapping group mappings 114 (i.e. mappings of groups of program primitive operations to groups of hardware stages), such that each program primitive operation (in the target program) is only mapped once in the output set and individual hardware stages (in the target hardware) are only mapped once within any group but may be included in mappings in more than one group mapping.

The final stage is the scheduling stage 106 and this takes the group mappings 114 generated by the grouping stage 104 and places them in an order for execution that maintains all dependencies. The output of the scheduling stage 106 is an ordered list of group mappings 116. The ordered list of group mappings 116 may also be referred to as 'hardware instructions' and each group mapping maps a group of program primitive operations (i.e. primitive operations from the program instructions) to hardware stages.

Once the ordered list of group mappings 116 has been generated (e.g. using the mapping method shown in FIG. 1 and described herein), the mapped groups of adjacent program primitive operations may be executed on the hardware arrangement.

As the pre-grouping stage 102 is dependent upon the hardware description 108 but independent of the program description 112, the output of the pre-grouping stage 102, the program-independent hardware descriptions 110, can be used as input to the grouping stage 104 for multiple programs that are to be executed using the target hardware (i.e. using the same hardware arrangement or an identical hardware arrangement that the hardware description 108 describes). This therefore enables re-use and reduces the overall computational effort and time taken to map a plurality of target programs to the same target hardware. The mapping of the plurality of target programs need not be performed at the same time and the program-independent hardware descriptions 110 may be stored for later use, e.g. in the event that the original target program is updated, the original program-independent hardware descriptions 110 may be read from storage and used to map the updated (and hence new) target program to the target hardware arrangement. The pre-grouping stage 102 therefore only needs to be performed once per target hardware arrangement.

The method of FIG. 1 may be implemented by a compiler. The pre-grouping stage 102 may be performed once for a given hardware arrangement (and hence hardware description 108) either when the compiler itself is compiled or when the compiler is loaded. The program-independent hardware descriptions 110 for the target hardware arrangement are then re-used whenever the compiler is used to compile (and hence map) a target program to the target hardware arrangement.

The hardware description 108 may be received in the form of a text file and an example is provided below.
[stage]
   name=SOURCE_0
   input=TMP
[stage]
   name=SOURCE_1
   input=TMP
[stage]
   name=ADD_STAGE
   ops=ADD(0, 1) ADD(1, 0)
   feed=SOURCE_0
   feed=SOURCE_1
[stage]
   name=OUTPUT_0
   output=TMP
   feed=ADD_STAGE
This example hardware description 108 describes a pipeline with two sources (SOURCE_0 and SOURCE_1) which can read from temporary registers (TMP), then an add stage which can add them in either order (this is to make sure it finds all possible mappings but can only be done for operations which are commutative). The result of the add (OUTPUT_0) can then be written back to the temporary registers by the destination stage.

Where the hardware description 108 is received in the form of a text file (e.g. as in the example above), it may then be read by a script and converted into another format (e.g. into C++ headers) which encodes the elements of the hardware description 108 into data structures which can be used in the pre-grouping stage 102.

The program-independent hardware descriptions 110 that are generated in the pre-grouping stage 102 may define, for each stage, the operation performed (e.g. MUL), the inputs (e.g. two inputs) and the outputs (e.g. one output). The inputs and outputs may be defined in terms of their number and/or identity (e.g. an identifier for each input/output). For example, a program-independent hardware description 110 may have the format: MUL 2SRC 1DST which defines that the stage performs the operation 'MUL', takes two inputs (where SRC stands for 'source') and has one output (where DST stands for 'destination'). In some examples the program-independent hardware descriptions 110 may not explicitly define the inputs and/or outputs and instead the missing input/output information may be implied. For example, it may be assumed that where the number of inputs / outputs is not defined there is only one input / output or there is a default number of inputs / outputs (e.g. a default number of two inputs and/or a default number of one output). For example, a stage description may have the format: ADD (0,2), where the stage performs the operation 'ADD' and takes inputs from input numbers 0 and 2. In this example, it is implicit that there is a single output as it is not specified in the stage description. Where inputs are identified, these may be inputs to the hardware arrangement (e.g. where the stage is at the start of the pipeline) or inputs from an earlier stage in the hardware arrangement. Similarly, where outputs are identified, these may be outputs from the hardware arrangement (e.g. where the stage is at the end of the pipeline) or outputs to a subsequent stage in the hardware arrangement. Where a hardware stage can perform more than one operation, e.g. where a stage can perform either MUL or ADD, a separate stage description is generated for each operation. Where there is more than one program-independent hardware description 110 for the same hardware stage, the program-independent hardware descriptions 110 encode constraints that prevent the same hardware stage from being used more than once at any time (e.g. to prevent the same hardware stage being used simultaneously for different operations). Where there are limitations in the hardware, e.g. such that only one of a pair of hardware stages can be used at any time, these limitations are also encoded as constraints within the program-independent hardware descriptions 110 (e.g. a program-independent hardware description 110 indicate that it uses both of the pair of hardware stages in order to exclude combinations which try to use both). The program-independent hardware descriptions 110 may also include format information, i.e. they may specify the allowed data formats of the inputs and/or outputs (e.g. F16, F32, etc.), program-independent hardware descriptions 110 for input stages may define which registers they can read from and program-independent hardware descriptions for output stages may define which registers they can output data to.

In various examples, the program-independent hardware descriptions 110 are defined according to a hierarchy, as shown in FIG. 1, and this enables constraints (e.g. constraints regarding the use of particular hardware stages) to be encoded within the program-independent hardware descriptions 110 at different levels. As shown in FIG. 1, the hierarchy within a program-independent hardware description 110 may comprise four layers (in decreasing order): Pipeline Description 124, Stage Descriptions 126, Operation Description 122, Input/Output Masks 120.

A pipeline description 124 may contain overall information about what stages it contains as a list of one or more stage descriptions 126, and useful features at this level e.g. how preferable that pipeline is to use.

A stage description 126 contains information about which operations (i.e. which hardware primitive operations) can be performed at which formats by this stage by reference to one or more operation descriptions 122 (e.g. an F32 ADD operation description, an F16 ADD operation description, an F32 MUL operation description etc.). Information that encodes constraints about exclusive use of a hardware stage for a single function may be included within the stage descriptions 126. These constraints may be referred to as 'hardware stage usage constraints'.

An operation description 122 contains information about how an operation (i.e. a hardware primitive operation) is performed and defines the operation itself (e.g. MUL and in some examples the format at which the operation is performed, e.g. F32) and the possible (e.g. all possible) input and output routing description masks for the operation. Consequently, different operation descriptions may reference, or contain, the same input and/or output routing description mask. Furthermore, where an operation does not require inputs there may be no input routing description mask and similarly, where an operation does not require outputs, there may be no output routing description mask. There is an operation description 122 for each format, operation and stage combination (where the format refers to the precision at which the operation is performed rather than the format of the input/output data which may need to pass through a format conversion stage to be in the correct format for the operation), so a stage description 126 may comprise more than one operation description (e.g. one for each format and operation combination for that stage). For example, a hardware stage in a first pipeline that performs a MUL operation at F32 precision will have a distinct operation description from both a hardware stage in a second pipeline that performs a MUL at F16 precision (different format and different stage, same operation) and also from a hardware stage in a third pipeline that performs a MUL operation at F32 precision (different stage, same format and operation). Where there are two hardware stages in a first pipeline that perform the same operation at the same precision (e.g. two F32 MUL stages), there will be two operation descriptions 122, one for each hardware stage.

As described above, an operation description 122 may comprise a list of two or more masks 120. These two or more masks 120 may comprise one or more input routing description masks and/or one or more output routing description masks. The input routing description mask contains information about how data is routed to an operation, i.e. information about where the data came from, what route it took to get to the particular stage and what format the data was in at each stage. For example, for an F32 MUL performed at the stage MAIN_OP, the input routing description mask might encode that Input 0 (of the op) originated at the stage S0_ABS as an F32 and used the stage S0_NEG and S0_FLR (bypassing them) before terminating at MAIN_OP input 0 as an F32, and it might encode that Input 1 (of the op) originated at the stage S0 as either an F16 or an F32, used the S1_CONV format converter (where this may be implemented as a hardware stage and hence CONV is a further example of a primitive operation), used the stages S1_ABS, S1_NEG and S1_FLR (bypassing them) before terminating at MAIN_OP input 0 as an F32. and the output routing description mask contains information about how data is routed out of an operation, i.e. information about which output of the hardware stage the data came from and in which format, what route it took from the particular stage to the output (e.g. what stages it passed through) and what format the data was in at each stage. For example, for the same F32 MUL as in the input routing description mask it example, the output routing description mask might encode that Output 0 originated at MAIN_OP output 0 as an F32, used the SAT stage (bypassing it), used the output format converter, and reached DEST_0 as either an F32 or F16.

Many operation descriptions 122 will comprise multiple input routing description masks as they comprises a separate input routing description mask for each way that data could be routed to the operation. For example, if there are two inputs each of which could source from 3 stages, then the operation description 122 comprises 9 (i.e. 3x3) input routing description masks. Similarly, many operation descriptions 122 will comprise multiple output routing description masks as it comprises a separate output routing description mask for each way that data could be routed from the operation. For example, if there is one output which could feed one of two stages, then there would be two output routing description masks. The masks 120 within an operation description 122 inherently encode the number of inputs and outputs.

Whilst the above description refers to use of separate input routing description masks and output routing description masks, in other examples combined I/O routing description masks may be used which combine both input and output routing information. However, use of separate input and output routing description masks results in a less complex implementation (e.g. because of increased numbers of combinations and stages which only require inputs or outputs and not both).

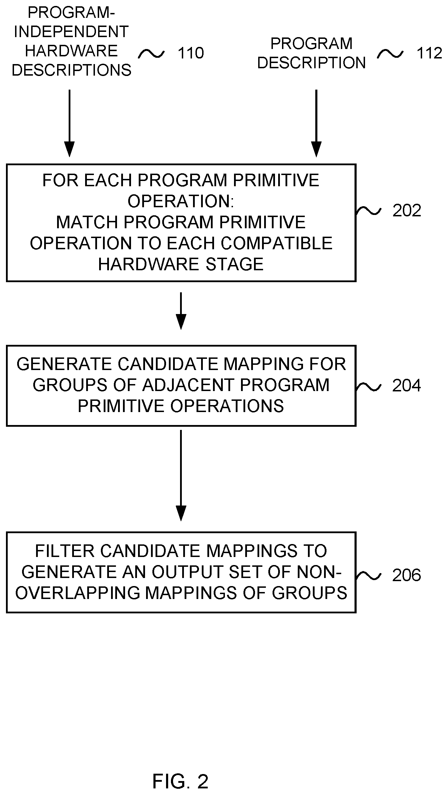

The grouping stage 104 uses the program-independent hardware descriptions 110 (as generated in the pre-grouping stage 102) to map the program primitive operations to one or more compatible hardware stages (block 202) and then performs grouping (block 204) and filtering (block 206), as shown in FIG. 2. The program-independent hardware descriptions 110 may be read from memory when performing grouping 104. The program primitive operation information is obtained from the program description 112 which includes dependency information and may be in the form of a control flow graph. Depending upon the capability of the hardware, a single program primitive operation may be mapped to a single hardware stage or to more than one hardware stage (in block 202). For example, if the target hardware arrangement comprises two hardware stages that both take two inputs, perform the MUL operation and generate an output, two mappings may be generated for a MUL program primitive operation (in the target program), each mapping the MUL program primitive operation to a different one of the two hardware stages. For input and output stages, register information (i.e. which registers can be read from or output to) may also be used when mapping program primitive operations to hardware stages. In various examples, each program primitive operation may be mapped to every compatible hardware stage. Where the program-independent hardware descriptions 110 include information on the format of inputs and outputs, this provides a characteristic upon which program-independent hardware descriptions 110 can be filtered, as well as the operation type, to speed up the identification of mappings between individual program primitive operations and individual hardware stages.

Having generated mappings between individual operations in the target program and hardware stages (in block 202), these individual mappings and the input and output data for both the operations and the hardware stages are used to generate candidate mappings of groups of adjacent operations in the target program (e.g. adjacent operations in the control flow graph) to groups of adjacent hardware stages (in block 204). For example a plurality of adjacent program primitive operations and adjacent hardware stages may be formed into a group where the operations correspond and inputs and outputs match. Each of these mappings of a group of adjacent program primitive operations to a group of adjacent hardware stages is referred to herein as a 'group mapping' or a 'candidate group mapping' before the subsequent filtering stage (in block 206). As described above, the information about inputs and outputs for a hardware stage is provided within the corresponding program-independent hardware description 110 and the information about inputs and outputs for a program primitive operation is provided within the program description 112.

A single program primitive operation may be included in more than one group and hence more than one candidate group mapping. A single hardware stage may be included in more than one group and hence more than one candidate mapping, but a single hardware stage can only appear once in any group (i.e. the stage cannot be reused within a group). For example, the following grouping would not be permitted because the single stage MUL_STAGE_0 occurs more than once:

```
       {
       MUL_STAGE_0 : MUL r0 : r1 r2
       MUL_STAGE_0 : MUL r3 : r4 r5
       } group 0;
```

In this illegal grouping the first instance of the stage, MUL_STAGE_0 takes inputs r1, r2 and generates output r0 and the second instance of the same stage takes inputs r4, r5 and generates output r3. In contrast, the shown in the example below is permitted because the hardware stage is not reused within either group:

```
       {
       MUL_STAGE_0 : MUL r0 : r1 r2
       } group 0;
       {MUL_STAGE_0 : MUL r3 : r4 r5
       } group 1;
```

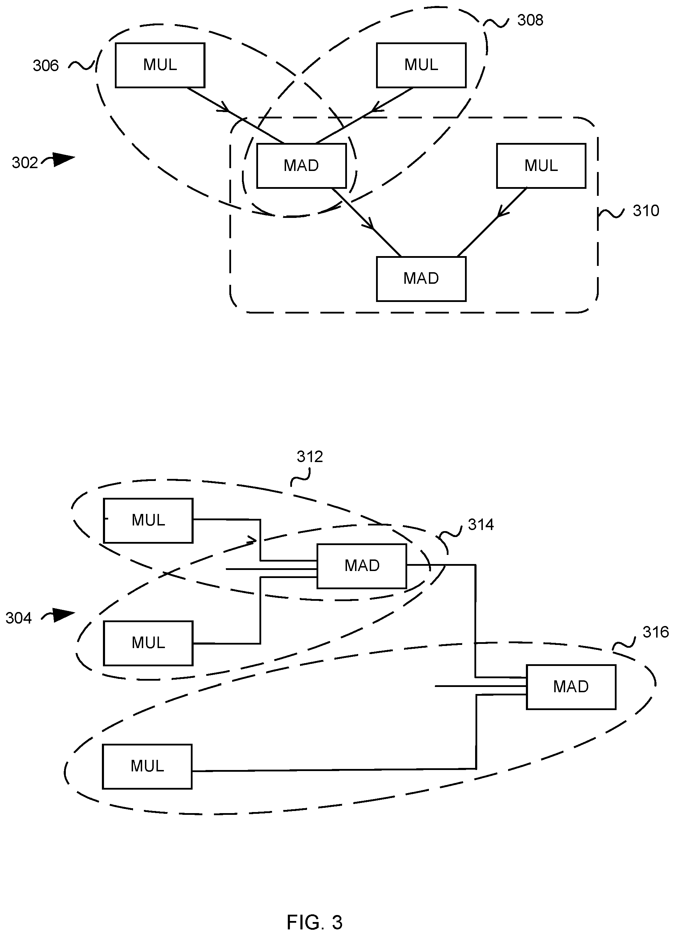

A simple example of the grouping can be described with reference to FIG. 3 which shows a control flow graph 302 for a target program and a target hardware arrangement 304. The control flow graph 302 comprises three MUL operations and two MAD operations. The target hardware arrangement 304 comprises three hardware stages that perform the MUL operation and two hardware stages that perform the MAD operation. In the initial stage of the grouping (block 202), each of the MUL operations in the target program may be mapped to each of the MUL hardware stages and each of the MAD operations in the target program may be mapped to each of the MAD hardware stages. In the second stage of the grouping (block 204), various different groupings 306, 308, 310 of adjacent program primitive operations (as indicated by the dotted outlines) may be mapped to different combinations of compatible hardware stages. For example, a first grouping 306 comprising a MAD sourcing from a MUL in the control flow graph may be identified and from the initial mappings (from block 202), three candidate group mappings 312, 314, 316 to pairs of hardware stages may be identified.

The grouping (in block 204) may create groups of different sizes, for example by initially generating groups of mappings of pairs of operations to pairs of hardware stages and then looking to increase the group size (e.g. to three operations and hardware stages, then four, etc.). For example, having created a group mapping as indicated by the dotted outlines 306 and 312 in FIG. 3, a larger group may be formed by adding a second MAD program primitive operation and corresponding MAD hardware stage. Alternatively the grouping may initially create smaller groups of mappings (e.g. for pairs of operations and hardware stages) and then seek to combine those groups into bigger groups. The groups that are combined to form larger groups may be overlapping groups (e.g. groups 306 and 308 in FIG. 3 to form a group comprising two MUL operations and one MAD operation) or non-overlapping groups. In further examples, a combination of these techniques may be used. The grouping (in block 204) therefore starts with the initial groupings, each comprising a single operation mapping, and seeks to combine them into more complex groups.

In an example, where there are dependencies between operations, the grouping may be performed serially (in block 204) by adding one operation at a time. In such an example, initially all groups comprise a single operation and may be referred to as 'one-op groups'. The grouping then iteratively tries to add each of the 'one-op groups' to 'N-op' groups (where an N-op group comprises N operations, where N is an integer that starts as 1 and then is incremented by 1 each iteration). Where are not dependencies between operations (e.g. MUL r0 : r1 r2 and MUL r3 : r4 r5), the grouping may be performed in parallel. The serial and parallel techniques may both be performed, for example, given a pipeline which has two different MUL stages, then a first grouping pass may use the 'serial grouping' technique and then, in a second pass, merge resulting groups of any size together if they use unique stages.

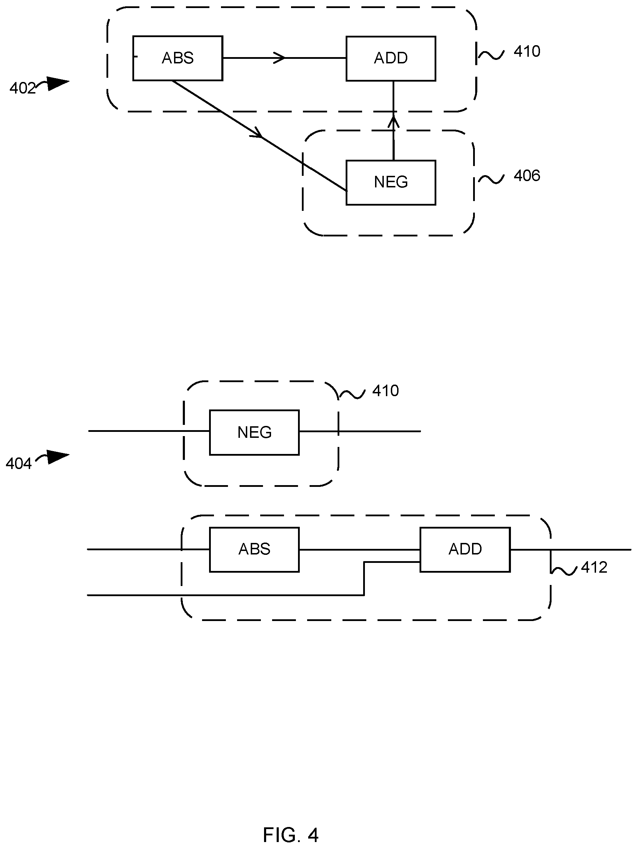

When performing the grouping (in block 204), potential circular dependencies may be tracked and a constraint may be placed on groups such that circular dependencies are avoided. For example, when performing grouping of operations, a group may not be performed where the resulting group would both receive inputs from an existing group and provide outputs to the same existing group. This can be described with reference to FIG. 4 which shows a portion of a control flow graph 402 for a target program and a portion of a target hardware arrangement 404. The portion of the control flow graph 402 comprises three operations: ABS, ADD and NEG. The portion of the target hardware arrangement 404 comprises three hardware stages, each of which is configured to implement one of the three operations shown (ABS, ADD and NEG) and in the initial stage of grouping (in block 202) each of the operations may be mapped to the corresponding hardware stage. In the second stage (in block 204), a grouping comprising the ABS and ADD program primitive operations (indicated by dotted outline 410) mapped to the corresponding hardware stages (indicated by the dotted outline 412) may not be permitted to be created because it would create a circular dependency between the newly created group and an existing group comprising the NEG program primitive operation (indicated by the dotted outline 406) mapped to the corresponding hardware stage (indicated by the dotted outline 408). As shown in FIG. 4, the NEG program primitive operation receives an input from the ABS program primitive operation and the ADD program primitive operation receives an input from the NEG program primitive operation. In this example it is not possible to group the three operations in another manner because only the ABS and ADD operations are adjacent hardware operations. In order to group these three operations shown in FIG. 4, it would need to be possible to perform all of the operations in order in one pass through a single pipeline and this is not possible using the hardware arrangement 404.

Circular dependencies may be tracked through the use of bit vectors that are created when performing the grouping (in block 204). At the start of the grouping, each of the primitive operations in the input program (which may, for example, be a shader) are assigned an identifier (ID) from a set of N identifiers (e.g. having values from 0 to N-1), where N is the number of these primitive operations. Several bit vectors of size N are then created for each operation, where the bit at index n encodes information about the primitive with an ID equal to n. This results in several bit vectors for each group: Direct Producers (that are primitive operations which are directly linked to the primitive operations within the group as producers, i.e. that provide direct inputs to the group), Producers (that are primitive operations which are linked to the primitive operations within the group as producers, but with no limit on how many producer links to traverse), Direct Consumers and Consumers, which are analogous to the producer equivalents but search in the other direction (and hence relate to outputs from the group). The grouping may attempt to avoid forming groups where there is an overlap between the producer and consumer bit vectors (i.e. the primitive operation(s) at the overlapping point(s) have links coming both in and out). This becomes more complex for groups where there may be no loop within simple operations, but once dependencies are added for groups then it becomes an issue. As an example of such a complex case, given four instructions, A, B, C and D, where: D depends on A, B depends on C, A and B are a group and C and D are a group. Then there are no circular dependencies between the individual operations because D only depends on the group AB, and B only depends on the group CD, but combined the group AB depends on the group CD and CD depends on AB. In this case, both AB and CD would be created, but if either was chosen, a more thorough check would take place to spot this dependency and the other one would be removed from the set of options.

The grouping (in block 204) results in a large number of candidate group mappings for different groups of operations and hardware stages. Candidate group mappings may overlap, in that two separate overlapping mappings may contain the same operation and/or same hardware stage (e.g. as shown in the example of FIG. 3 as described above). The final stage of the grouping stage 104 involves filtering the candidate group mappings to generate an output set of non-overlapping group mappings (block 206). Each program primitive operation in the target program is mapped exactly once in the output set of group mappings. Individual hardware stages are only mapped once within a given group (as described above) but may appear in multiple distinct group mappings within the output set. The filtering (in block 206) may be performed based on a predefined set of heuristics which may be user-specified based on required performance characteristics. For example, one or more of the following heuristics may be used: (i) preferring larger groups compared to smaller groups, (ii) preferring pipelines that run at higher rates, (iii) keeping predefined data types internal to a group, rather than having the data type as an input or output of the group (which may require it to be written to a register), (iv) minimising the overall number of sources of groups (e.g. because it costs power to transfer data across the wires to the source and it may also impact performance if the sources have to be read sequentially), (v) preferring performing an instruction at a lower precision (e.g. where an operation is mapped at two precisions, such as F16 and F32, and the lower precision mapping is preferred). As described above, data defining preferences regarding use of pipelines or other data used when applying a pre-defined heuristic (e.g. pipeline rates, etc.) may be included within the pipeline description 124 (e.g. including at lower stages of the hierarchy nested within the pipeline description 124). It is implicit that if there is only one group (or only one group left) for a given program primitive operation, then this group must be chosen.

The avoidance of circular dependencies when generating candidate group mappings (in block 204) has been described above and in addition, or instead, circular dependencies may be taken into consideration, and avoided, when performing filtering of the candidate group mappings (in block 206). For example, the filtering may exclude from the output set any combination of groups that would result in a circular dependency. Referring back to the example in FIG. 4, if both groups shown by the dotted outlines in FIG. 4 were part of the candidate mappings (e.g. because the formation of the ABS-ADD group was not blocked in block 204), the filtering process would not permit both groups to be part of the output set.

The scheduling stage 106 takes the groups of mappings 114 generated by the grouping stage 104 and places them in an order for execution that maintains all dependencies. The scheduling performed by the scheduling stage 106 may use any known scheduling technique and may use predefined criteria to generate an order that meets performance requirements (e.g. ordering the groups so that pipelines are not overloaded, latency of instructions such as samples are hidden where possible, etc.). As described above, the output of the scheduling stage 106 is an ordered group of mappings 116.

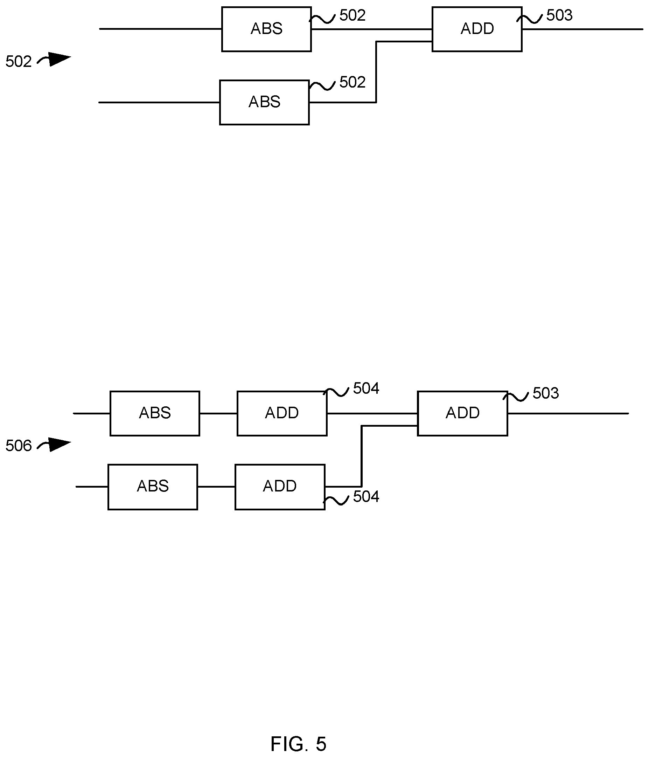

The methods described above assume that the hardware description 108 that is used in the pre-grouping stage 102 corresponds exactly to the hardware. In various examples, the hardware description 108 may be pre-processed to introduce dummy stages between actual hardware stages and this may be performed either as part of the pre-grouping stage 102 or separately. The dummy stages that are added into the hardware description 108 by the pre-processing may comprise one or more of: inputs, outputs and data duplicates. The dummy stages do not map to any hardware stages; however, they correspond to functionality which is implicit within the actual hardware stages. Furthermore, the dummy stages are not retained in the output ordered group mappings 116 but are instead used to encode information that is used when performing the grouping (in block 104). For example, given the hardware arrangement 501 in FIG. 5 which comprises two ABS hardware stages 502 (which may be referred to as ABS_0 and ABS_1) each providing an input to an ADD hardware stage, the encoding for ABS_0 and ABS_1 just indicates that they output a value to the ADD stage 503 without indicating whether they used unique inputs. By adding fake stages 504, as shown in the modified version of the hardware arrangement 506 shown in FIG. 5, the newly added fake ADD stages 504, have the effect of giving separate IDs to each input port of the original ADD stage 503.

Dummy input or output stages may be added to assist in tracking which inputs of a stage are used, for example where an actual hardware stage has multiple sources a dummy input stage may be added and where an actual hardware stage routes to multiple places a dummy output stage may be added. Dummy input stages may also be used for vector splits and dummy output stages for vector merges, e.g. such that the dummy stages provide information on the parts of the vector that you are providing (using a dummy output stage) or receiving (using a dummy input stage). For example, for a vector split, a dummy input stage receives vector A as an input and then outputs two sub-vectors A' and A" which can then be input to different hardware stages. Similarly for a vector merge, a dummy output stage receives two vectors B and C and then outputs a combined vector BC.

A dummy data duplicate stage may be inserted into the hardware description 108 where sources are, or could be, shared between multiple hardware stages (i.e. a single source is, or could be, input to more than one hardware stage). The source path terminates at the data duplicate stage and the masks of the data duplicate stage describe the routes from the inputs to the data duplicate stage. The use of the masks enables more flexible sourcing.

The methods described above assume that the target program is written in terms of operations that can each be implemented in hardware, i.e. that the target program is constructed out of program primitive operations that each have an exact mapping to a hardware stage. If this is not the case, e.g. where the program includes an operation that cannot be performed by a hardware stage (and hence is not a program primitive operation), then pre-processing may be performed to convert the target program into operations that do have an exact hardware mapping (i.e. to convert the program into program primitive operations). This may, for example, involve splitting a program operation (which is not a program primitive operation) into a plurality of sub-operations, each of which have an exact mapping to a hardware stage and hence are program primitive operations (e.g. splitting a subtract operation into the primitive operations of NEG and ADD or splitting an integer division operation into a plurality of primitive operations), and/or combining program operations (which may or may not be program primitive operations) into a program primitive operation (e.g. combining a MUL and an ADD into a MAD, combining a series of operations that collectively reverse the bits in a register, combining a series of operations that collectively count the number of leading zeros, etc.). This pre-processing of the target program may be performed as part of the grouping stage 104 or separately. In either case, the output of the pre-processing may be stored so that it can be re-used should the target program need to be mapped to different hardware. This pre-processing of the target program is entirely independent of (and separate from) the pre-processing of the hardware description.

By using the methods described above to map a target program to a target hardware arrangement, the time taken to perform the mapping for a single combination of target program and target hardware arrangement is reduced, particularly compared to use of known brute-force techniques. Furthermore, the performance of the target program when executed on the target hardware arrangement may be improved (e.g. in terms of speed of operation, efficiency in use of the hardware, power consumption, etc.), particularly compared to use of tailored (i.e. handwritten) pattern-matching techniques and particularly for more complex hardware arrangements (e.g. more than 8-10 stages with little parallelism). By splitting the mapping into a pre-grouping stage 102 that is independent of the target program, followed by a grouping stage 104 that is dependent upon the target program, the output of the pre-grouping stage 102 can be reused for different target programs that are to be mapped onto (and hence executed by) the same or identical target hardware arrangements. This results in a method which is much more scalable (i.e. because the search spaces become additive rather than multiplicative).

The table below describes the trade-offs of different methods in different scenarios. The time investment describes the time investment needed to add a new hardware configuration. The complexity describes the hardware to which the program (e.g. shader) is being mapped.

| Method | Low HW Complexity | High HW complexity |
|---|---|---|
| Brute Force | Fast compilation (<1 second), good program, low engineering time (minutes to hours) | Very slow compilation (hours or days), good program, low engineering time (minutes to hours) |
| Tailored | Negligible compilation time (micro or milliseconds), near optimal program, medium engineering time (weeks to months) | Fast compilation (<1 second), sub-optimal program, large engineering time (months to years) |
| Method described herein | Fast compilation (< 1 second), near optimal program, low engineering time (minutes to hours) | Medium Compilation (10s of seconds), near optimal program, low engineering time. (minutes to hours) |

As shown in the table, for low complexity hardware, the method described herein results in significantly reduced engineering time compared to the tailored approach and a better quality program than the brute force approach. Similarly, for high complexity hardware, the method described herein results in significantly reduced engineering time compared to the tailored approach and a better quality program than both tailored and the brute force approaches (e.g. because it considers all possible patterns which is not possible for the tailored approach when the hardware is complex).

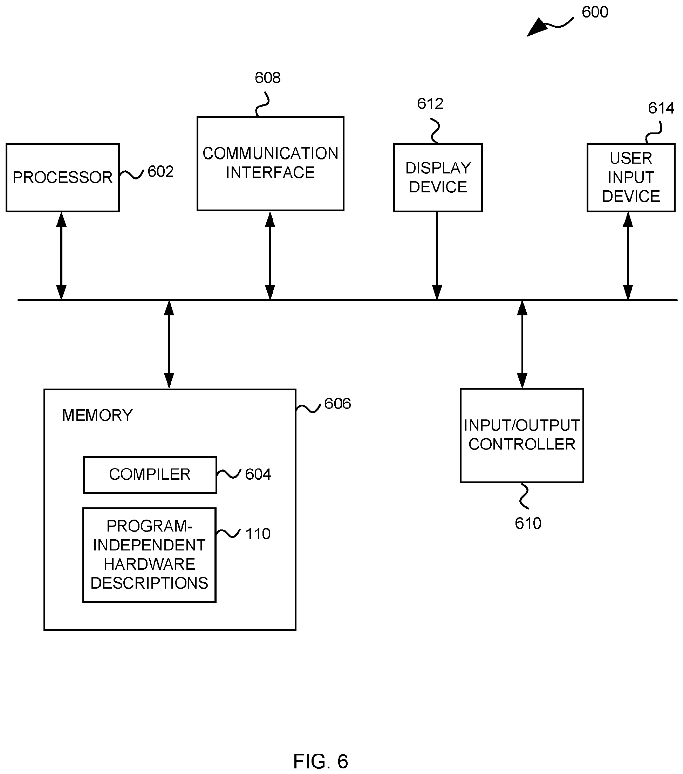

FIG. 6 illustrates various components of an exemplary computing-based device 600 which may be implemented as any form of a computing and/or electronic device, and in which may be used to implement the methods described herein.

Computing-based device 600 comprises one or more processors 602 which may be microprocessors, controllers or any other suitable type of processors for processing computer executable instructions to control the operation of the device in order to execute a compiler configured to perform the methods described herein. In some examples, for example where a system on a chip architecture is used, the processors 602 may include one or more fixed function blocks (also referred to as accelerators) which implement a part of the method of mapping a target program to a target hardware arrangement in hardware (rather than software or firmware). Platform software comprising an operating system or any other suitable platform software may be provided at the computing-based device to enable compiler software 604 to be executed on the device.

The computer executable instructions may be provided using any computer-readable media that is accessible by computing based device 600. Computer-readable media may include, for example, computer storage media such as memory 606 and communications media. Computer storage media (i.e. non-transitory machine readable media), such as memory 606, includes volatile and non-volatile, removable and non-removable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (i.e. non-transitory machine readable media, e.g. memory 606) is shown within the computing-based device 600 it will be appreciated that the storage may be distributed or located remotely and accessed via a network or other communication link (e.g. using communication interface 608). The memory 606 may be arranged to store computer executable instructions for the compiler software 604 and/or the program-independent hardware descriptions 110.

The computing-based device 600 also comprises an input/output controller 610 arranged to output display information to a display device 612 which may be separate from or integral to the computing-based device 600. The display information may provide a graphical user interface. The input/output controller 610 is also arranged to receive and process input from one or more devices, such as a user input device 614 (e.g. a mouse or a keyboard). This user input may be used to configure and run the compiler 604. In an embodiment the display device 612 may also act as the user input device 614 if it is a touch sensitive display device. The input/output controller 610 may also output data to devices other than the display device.

The hardware arrangements 304, 404 of FIGs. 3 and 4 are shown as comprising a number of functional blocks. This is schematic only and is not intended to define a strict division between different logic elements of such entities. Each functional block may be provided in any suitable manner. It is to be understood that intermediate values described herein as being formed by a hardware stage need not be physically generated by the hardware stage at any point and may merely represent logical values which conveniently describe the processing performed by the hardware stage between its input and output.

Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be any kind of general purpose or dedicated processor, such as a CPU, GPU, System-on-chip, state machine, media processor, an application-specific integrated circuit (ASIC), a programmable logic array, a field-programmable gate array (FPGA), physics processing units (PPUs), radio processing units (RPUs), digital signal processors (DSPs), general purpose processors (e.g. a general purpose GPU), microprocessors, any processing unit which is designed to accelerate tasks outside of a CPU, etc. A computer or computer system may comprise one or more processors. Those skilled in the art will realize that such processing capabilities are incorporated into many different devices and therefore the term 'computer' includes set top boxes, media players, digital radios, PCs, servers, mobile telephones, personal digital assistants and many other devices.

Those skilled in the art will realize that storage devices utilized to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a DSP, programmable logic array, or the like.

The methods described herein may be performed by a computer configured with software in machine readable form stored on a tangible storage medium e.g. in the form of a computer program comprising computer readable program code for configuring a computer to perform the constituent portions of described methods or in the form of a computer program comprising computer program code means adapted to perform all the steps of any of the methods described herein when the program is run on a computer and where the computer program may be embodied on a computer readable storage medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

The hardware components described herein may be generated by a non-transitory computer readable storage medium having encoded thereon computer readable program code.

Memories storing machine executable data for use in implementing disclosed aspects can be non-transitory media. Non-transitory media can be volatile or non-volatile. Examples of volatile non-transitory media include semiconductor-based memory, such as SRAM or DRAM. Examples of technologies that can be used to implement non-volatile memory include optical and magnetic memory technologies, flash memory, phase change memory, resistive RAM.

A particular reference to "logic" refers to structure that performs a function or functions. An example of logic includes circuitry that is arranged to perform those function(s). For example, such circuitry may include transistors and/or other hardware elements available in a manufacturing process. Such transistors and/or other elements may be used to form circuitry or structures that implement and/or contain memory, such as registers, flip flops, or latches, logical operators, such as Boolean operations, mathematical operators, such as adders, multipliers, or shifters, and interconnect, by way of example. Such elements may be provided as custom circuits or standard cell libraries, macros, or at other levels of abstraction. Such elements may be interconnected in a specific arrangement. Logic may include circuitry that is fixed function and circuitry can be programmed to perform a function or functions; such programming may be provided from a firmware or software update or control mechanism. Logic identified to perform one function may also include logic that implements a constituent function or sub-process. In an example, hardware logic has circuitry that implements a fixed function operation, or operations, state machine or process.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget."

Any range or device value given herein may be extended or altered without losing the effect sought, as will be apparent to the skilled person.

It will be understood that the benefits and advantages described above may relate to one embodiment or may relate to several embodiments. The embodiments are not limited to those that solve any or all of the stated problems or those that have any or all of the stated benefits and advantages.

Any reference to 'an' item refers to one or more of those items. The term 'comprising' is used herein to mean including the method blocks or elements identified, but that such blocks or elements do not comprise an exclusive list and an apparatus may contain additional blocks or elements and a method may contain additional operations or elements. Furthermore, the blocks, elements and operations are themselves not impliedly closed.

The steps of the methods described herein may be carried out in any suitable order, or simultaneously where appropriate. The arrows between boxes in the figures show one example sequence of method steps but are not intended to exclude other sequences or the performance of multiple steps in parallel. Aspects of any of the examples described above may be combined with aspects of any of the other examples described to form further examples without losing the effect sought. Where elements of the figures are shown connected by arrows, it will be appreciated that these arrows show just one example flow of communications (including data and control messages) between elements. The flow between elements may be in either direction or in both directions.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein.

## Claims

1. A method of mapping a program to a hardware arrangement, the hardware arrangement comprising a plurality of interconnected hardware stages and the method comprising:
analysing the plurality of hardware stages in the hardware arrangement to generate, for each stage, a program-independent hardware description defining an operation performed by the stage and inputs and outputs of the stage (102), wherein the program-independent hardware description for a hardware stage defines either:
a number of inputs received by the hardware stage and/or a number of outputs generated by the hardware stage; or
all inputs received by the hardware stage and/or all outputs generated by the hardware stage;
generating a non-overlapping set of mappings between groups of adjacent program primitive operations in the program and groups of interconnected hardware stages in the hardware arrangement by mapping the program primitive operations to compatible hardware stages using the program-independent hardware descriptions (104) by:
for each program primitive operation in the program, using the program-independent hardware descriptions to generate one or more mappings between the program primitive operation and different compatible hardware stages in the hardware arrangement (202);
generating a plurality of candidate group mappings, each candidate group mapping mapping a group of adjacent program primitive operations in the program to a group of interconnected hardware stages, by analysing inputs and outputs of the program primitive operations and hardware stages (204); and
filtering the plurality of candidate group mappings to generate a non-overlapping set of mappings (206); and
scheduling the groups of adjacent program primitive operations into an order for execution (106).

2. The method according to claim 1, wherein using the program-independent hardware descriptions to generate one or more mappings between the program primitive operation and different compatible hardware stages in the hardware arrangement comprises:
using the program-independent hardware descriptions to generate all possible mappings between the program primitive operation and different compatible hardware stages in the hardware arrangement.

3. The method according to claim 1 or 2, wherein generating a plurality of candidate group mappings comprises excluding group mappings for any circularly dependent group of adjacent program primitive operations.

4. The method according to claim 3, wherein excluding group mappings for any circularly dependent group of adjacent program primitive operations comprises:
assigning an identifier to each primitive operation in the input program;
for each operation, creating one or more bit vectors that encode information about each primitive operation linked to the operation through an input or output;
for each group mapping, creating one or more producer bit vectors that identify primitive operations that provide inputs to the group and one or more consumer bit vectors that identify primitive operations that receive outputs from the group; and
excluding group mappings where there is an overlap between producer and consumer bit vectors.

5. The method according to any of the preceding claims, wherein a program-independent hardware description (110) for a hardware stage comprises a hierarchy of a pipeline description (124), one or more stage descriptions (126), one or more operation descriptions (122) and a plurality of input/output masks (120), wherein the plurality of input/output masks (120) are nested within the one or more operation descriptions (122), the one or more operation descriptions (122) are nested within the one or more stage descriptions (126) and the one or more stage descriptions (126) are nested within the pipeline description (124).

6. The method according to claim 5, wherein generating a plurality of candidate group mappings comprises excluding group mappings that violate a hardware stage usage constraint defined in a stage description (126).

7. The method according to claim 5 or 6, wherein filtering the plurality of candidate group mappings to generate a non-overlapping set of mappings comprises filtering the plurality of candidate group mappings according to one or more pre-defined heuristics and using data defined in the pipeline description (124).

8. The method according to any of claims 5-7, wherein an operation description (122) comprises a plurality of input/output masks, the plurality of masks comprising a separate input mask corresponding to each possible way that data is routed to the operation and a separate output mask corresponding to each possible way that data is routed from an operation.

9. The method according to any of the preceding claims, further comprising:
prior to analysing the plurality of hardware stages in the hardware arrangement to generate, for each stage, a program-independent hardware description: introducing one or more dummy stages (504) between hardware stages in the plurality of hardware stages, wherein a dummy stage comprises a dummy input stage, a dummy output stage or a dummy data duplicate stage; and/or
prior to analysing the program to generate a non-overlapping set of mappings between groups of adjacent program primitive operations in the program and groups of interconnected hardware stages in the hardware arrangement: splitting a program operation in the program into a plurality of program primitive operations that collectively perform the first operation; and/or combining two or more program operations in the program into a program primitive operation that performs the combination of the two or more program operations.

10. The method according to any of the preceding claims, further comprising
storing the program-independent hardware descriptions for the hardware arrangement; and
mapping a second program to the hardware arrangement, wherein mapping the second program to the hardware arrangement comprises:
analysing the second program to generate a non-overlapping set of mappings between groups of adjacent program primitive operations in the second program and groups of interconnected hardware stages in the hardware arrangement based on the stored program-independent hardware descriptions (104); and
scheduling the groups of adjacent program primitive operations in the second program into an order for execution (106).

11. The method according to any of the preceding claims, further comprising:
executing the mapped groups of adjacent program primitive operations on the hardware arrangement.

12. The method according to any of the preceding claims, wherein the hardware arrangement is a collection of hardware pipelines.

13. Computer readable code configured to cause the method of any of claims 1-10 to be performed when the code is run.

14. A computer readable storage medium having encoded thereon the computer readable code of claim 13.

## Patentansprüche

1. Verfahren zum Abbilden eines Programms auf eine Hardwareanordnung, wobei die Hardwareanordnung eine Mehrzahl miteinander verbundener Hardwarestufen umfasst und das Verfahren umfasst:
Analysieren der Mehrzahl der Hardwarestufen in der Hardwareanordnung, um für jede Stufe eine programmunabhängige Hardwarebeschreibung zu generieren, die eine durch die Stufe durchgeführte Operation sowie Eingänge und Ausgänge der Stufe (102) definiert, wobei die programmunabhängige Hardwarebeschreibung für eine Hardwarestufe entweder/oder definiert:
eine Anzahl von Eingängen, die von der Hardwarestufe empfangen werden, und/oder eine Anzahl von Ausgängen, die von der Hardwarestufe generiert werden; oder
alle von der Hardwarestufe empfangenen Eingänge und/oder alle von der Hardwarestufe generierten Ausgänge;
Generieren eines nicht überlappenden Satzes von Abbildungen zwischen Gruppen von benachbarten Programm-Primitivoperationen in dem Programm und Gruppen von miteinander verbundenen Hardwarestufen in der Hardwareanordnung durch Abbilden der Programm-Primitivoperationen auf kompatible Hardwarestufen unter Verwendung der programmunabhängigen Hardwarebeschreibungen (104) durch:
für jede Programm-Primitivoperation in dem Programm, Verwenden der programmunabhängigen Hardwarebeschreibungen, um eine oder mehrere Abbildungen zwischen der Programm-Primitivoperation und verschiedenen kompatiblen Hardwarestufen in der Hardwareanordnung (202) zu erzeugen;
Generieren einer Mehrzahl von Kandidatengruppenabbildungen, wobei jede Kandidatengruppenabbildung eine Gruppe von benachbarten Programm-Primitivoperationen in dem Programm durch Analysieren von Eingaben und Ausgaben der Programm-Primitivoperationen und Hardwarestufen (204) auf eine Gruppe von miteinander verbundenen Hardwarestufen abbildet, und
Filtern der Mehrzahl von Kandidatengruppenabbildungen, um einen nicht überlappenden Satz von Abbildungen (206) zu generieren; und
Planen der Gruppen benachbarter Programm-Primitivoperationen in eine Reihenfolge zur Ausführung (106).

2. Verfahren nach Anspruch 1, wobei das Verwenden der programmunabhängigen Hardwarebeschreibungen, um eine oder mehrere Abbildungen zwischen der Programm-Primitivoperation und unterschiedlichen kompatiblen Hardwarestufen in der Hardwareanordnung zu generieren, umfasst:
Verwenden der programmunabhängigen Hardwarebeschreibungen, um alle möglichen Abbildungen zwischen der Programm-Primitivoperation und verschiedenen kompatiblen Hardwarestufen in der Hardwareanordnung zu generieren.

3. Verfahren nach Anspruch 1 oder 2, wobei das Generieren einer Mehrzahl von Kandidatengruppenabbildungen das Ausschließen von Gruppenabbildungen für jede kreisförmig abhängige Gruppe von benachbarten Programm-Primitivoperationen umfasst.

4. Verfahren nach Anspruch 3, wobei das Ausschließen von Gruppenabbildungen für jede kreisförmig abhängige Gruppe von benachbarten Programm-Primitivoperationen umfasst:
Zuweisen einer Kennung zu jeder Primitivoperation in dem Eingabeprogramm;
für jede Operation, Erzeugen eines oder mehrerer Bitvektoren, die Informationen über jede Primitivoperation codieren, die mit der Operation über einen Eingang oder Ausgang verknüpft ist;
für jede Gruppenabbildung, Erzeugen eines oder mehrerer Erzeuger-Bitvektoren, die Primitivoperationen identifizieren, die Eingänge an die Gruppe bereitstellen, und eines oder mehrerer Verbraucher-Bitvektoren, die Primitivoperationen identifizieren, die Ausgänge von der Gruppe empfangen; und
Ausschließen von Gruppenabbildungen, bei denen eine Überlappung zwischen Erzeuger- und Verbraucher-Bitvektoren vorliegt.

5. Verfahren nach einem der vorhergehenden Ansprüche, wobei eine programmunabhängige Hardwarebeschreibung (110) für eine Hardwarestufe eine Hierarchie einer Pipelinebeschreibung (124), einer oder mehrerer Stufenbeschreibungen (126), einer oder mehrerer Operationsbeschreibungen (122) und einer Mehrzahl von Eingangs-/Ausgangsmasken (120) umfasst, wobei die Mehrzahl von Eingangs-/Ausgangsmasken (120) innerhalb der einen oder mehreren Operationsbeschreibungen (122) verschachtelt ist, die eine oder mehreren Operationsbeschreibungen (122) innerhalb der einen oder mehreren Stufenbeschreibungen (126) verschachtelt sind und die eine oder mehreren Stufenbeschreibungen (126) innerhalb der Pipelinebeschreibung (124) verschachtelt sind.

6. Verfahren nach Anspruch 5, wobei das Generieren einer Mehrzahl von Kandidatengruppenabbildungen das Ausschließen von Gruppenabbildungen umfasst, die eine in einer Stufenbeschreibung (126) definierte Hardwarestufen-Nutzungsbeschränkung verletzen.

7. Verfahren nach Anspruch 5 oder 6, wobei das Filtern der Mehrzahl von Kandidatengruppenabbildungen, um einen nicht überlappenden Satz von Abbildungen zu generieren, das Filtern der Mehrzahl von Kandidatengruppenabbildungen gemäß einer oder mehreren vordefinierten Heuristiken und das Verwenden von in der Pipelinebeschreibung (124) definierten Daten umfasst.

8. Verfahren nach einem der Ansprüche 5 bis 7, wobei eine Operationsbeschreibung (122) eine Mehrzahl von Eingabe-/Ausgabemasken umfasst, wobei die Mehrzahl von Masken einer separaten Eingabemaske für jede mögliche Art der Weiterleitung von Daten an die Operation sowie einer separaten Ausgabemaske für jede mögliche Art der Weiterleitung von Daten aus einer Operation entspricht.

9. Verfahren nach einem der vorhergehenden Ansprüche, ferner umfassend:
vor dem Analysieren der Mehrzahl von Hardwarestufen in der Hardwareanordnung zum Generieren einer programmunabhängigen Hardwarebeschreibung für jede Stufe: Einführen einer oder mehrerer Dummy-Stufen (504) zwischen Hardwarestufen in der Mehrzahl von Hardwarestufen, wobei eine Dummy-Stufe eine Dummy-Eingangsstufe, eine Dummy-Ausgangsstufe oder eine Dummy-Datenduplikatstufe umfasst; und/oder
vor dem Analysieren des Programms zum Generieren eines nicht überlappenden Satzes von Abbildungen zwischen Gruppen von benachbarten Programm-Primitivoperationen in dem Programm und Gruppen von miteinander verbundenen Hardwarestufen in der Hardwareanordnung: Aufteilen einer Programmoperation in dem Programm in eine Mehrzahl von Programm-Primitivoperationen, die kollektiv die erste Operation durchführen; und/oder Kombinieren von zwei oder mehr Programmoperationen in dem Programm in eine Programm-Primitivoperation, welche die Kombination der zwei oder mehr Programmoperationen durchführt.

10. Verfahren nach einem der vorstehenden Ansprüche, ferner umfassend
Speichern der programmunabhängigen Hardwarebeschreibungen für die Hardwareanordnung; und
Abbilden eines zweiten Programms auf die Hardwareanordnung, wobei das Abbilden des zweiten Programms auf die Hardwareanordnung umfasst:
Analysieren des zweiten Programms zum Generieren eines nicht überlappenden Satzes von Abbildungen zwischen Gruppen von benachbarten Programm-Primitivoperationen in dem zweiten Programm und Gruppen von miteinander verbundenen Hardwarestufen in der Hardwareanordnung basierend auf den gespeicherten programmunabhängigen Hardwarebeschreibungen (104); und
Planen der Gruppen von benachbarten Programm-Primitivoperationen in dem zweiten Programm in eine Reihenfolge zur Ausführung (106).

11. Verfahren nach einem der vorhergehenden Ansprüche, ferner umfassend:
Ausführen der abgebildeten Gruppen von benachbarten Programm-Primitivoperationen auf der Hardwareanordnung.

12. Verfahren nach einem der vorhergehenden Ansprüche, wobei die Hardwareanordnung eine Sammlung von Hardware-Pipelines ist.

13. Computerlesbarer Code, der konfiguriert ist, eine Durchführung des Verfahrens nach einem der Ansprüche 1-10 zu veranlassen, wenn der Code ausgeführt wird.

14. Computerlesbares Speichermedium mit darauf codiertem computerlesbarem Code nach Anspruch 13.

## Revendications

1. Procédé de mappage d'un programme sur un agencement matériel, l'agencement matériel comprenant une pluralité d'étages matériels interconnectés et le procédé comprenant :
l'analyse de la pluralité d'étages matériels dans l'agencement matériel pour générer, pour chaque étage, une description matérielle indépendante du programme définissant une opération réalisée par l'étage et des entrées et sorties de l'étage (102), dans lequel la description matérielle indépendante du programme pour un étage matériel définit soit :
un nombre d'entrées reçues par l'étage matériel et/ou un nombre de sorties générées par l'étage matériel ; soit
toutes les entrées reçues par l'étage matériel et/ou toutes les sorties générées par l'étage matériel ;
la génération d'un ensemble sans chevauchement de mappages entre des groupes d'opérations de primitives de programme adjacentes dans le programme et des groupes d'étages matériels interconnectés dans l'agencement matériel en mappant les opérations de primitives de programme à des étages matériels compatibles en utilisant les descriptions matérielles indépendantes du programme (104) par :
pour chaque opération de primitive de programme dans le programme, l'utilisation des descriptions matérielles indépendantes du programme pour générer un ou plusieurs mappages entre l'opération primitive de programme et différents étages matériels compatibles dans l'agencement matériel (202) ;
la génération d'une pluralité de mappages de groupes candidats, chaque mappage de groupe candidat mappant un groupe d'opérations de primitives de programme adjacentes dans le programme avec un groupe d'étages matériels interconnectés, en analysant des entrées et des sorties des opérations de primitives de programme et des étages matériels (204) ; et
le filtrage de la pluralité de mappages de groupes candidats pour générer un ensemble sans chevauchement de mappages (206) ; et
la planification des groupes d'opérations de primitives de programme adjacentes selon un ordre d'exécution (106).

2. Procédé selon la revendication 1, dans lequel l'utilisation des descriptions matérielles indépendantes du programme pour générer un ou plusieurs mappages entre l'opération primitive de programme et différents étages matériels compatibles dans l'agencement matériel comprend :
l'utilisation des descriptions matérielles indépendantes du programme pour générer tous les mappages possibles entre l'opération primitive de programme et différents étages matériels compatibles dans l'agencement matériel.

3. Procédé selon la revendication 1 ou 2, dans lequel la génération d'une pluralité de mappages de groupes candidats comprend l'exclusion de mappages de groupe pour tout groupe dépendant circulairement d'opérations de primitives de programme adjacentes.

4. Procédé selon la revendication 3, dans lequel l'exclusion de mappages de groupe pour tout groupe dépendant circulairement d'opérations de primitives de programme adjacentes comprend :
l'attribution d'un identifiant à chaque opération de primitive dans le programme d'entrée ;
pour chaque opération, la création d'un ou plusieurs vecteurs de bits qui codent des informations concernant chaque opération de primitive liée à l'opération par l'intermédiaire d'une entrée ou d'une sortie ;
pour chaque mappage de groupe, la création d'un ou plusieurs vecteurs de bits producteurs qui identifient des opérations de primitives qui fournissent des entrées au groupe et d'un ou plusieurs vecteurs de bits consommateurs qui identifient des opérations primitives qui reçoivent des sorties en provenance du groupe ; et
l'exclusion des mappages de groupes où il existe un chevauchement entre les vecteurs de bits producteurs et consommateurs.

5. Procédé selon l'une quelconque des revendications précédentes, dans lequel une description matérielle indépendante du programme (110) pour un étage matériel comprend une hiérarchie d'une description de pipeline (124), une ou plusieurs descriptions d'étage (126), une ou plusieurs descriptions d'opération (122) et une pluralité de masques d'entrée/sortie (120), dans lequel la pluralité de masques d'entrée/sortie (120) sont imbriqués au sein des une ou plusieurs descriptions d'opération (122), les une ou plusieurs descriptions d'opération (122) étant imbriquées au sein des une ou plusieurs descriptions d'étage (126) et les une ou plusieurs descriptions d'étage (126) étant imbriquées au sein de la description de pipeline (124).

6. Procédé selon la revendication 5, dans lequel la génération d'une pluralité de mappages de groupes candidats comprend l'exclusion de mappages de groupes qui violent une contrainte d'usage d'étage matériel définie dans une description d'étage (126).

7. Procédé selon la revendication 5 ou 6, dans lequel le filtrage de la pluralité de mappages de groupes candidats pour générer un ensemble sans chevauchement de mappages comprend le filtrage de la pluralité de mappages de groupes candidats selon une ou plusieurs heuristiques prédéfinies et l'utilisation de données définies dans la description de pipeline (124).

8. Procédé selon l'une quelconque des revendications 5 à 7, dans lequel une description d'opération (122) comprend une pluralité de masques d'entrée/sortie, la pluralité de masques comprenant un masque d'entrée séparé correspondant à chaque manière possible dont des données sont acheminées vers l'opération et un masque de sortie séparé correspondant à chaque manière possible dont des données sont acheminées depuis une opération.

9. Procédé selon l'une quelconque des revendications précédentes, comprenant en outre :
avant l'analyse de la pluralité d'étages matériels dans l'agencement matériel pour générer, pour chaque étage, une description matérielle indépendante du programme : l'introduction d'un ou de plusieurs étages fictifs (504) entre les étages matériels dans la pluralité d'étages matériels, dans lequel un étage fictif comprend un étage d'entrée fictif, un étage de sortie fictif ou un étage de duplication de données fictif ; et/ou
avant d'analyser le programme pour générer un ensemble sans chevauchement de mappages entre des groupes d'opérations de primitives de programme adjacentes dans le programme et des groupes d'étages matériels interconnectés dans l'agencement matériel : la division d'une opération de programme dans le programme en une pluralité d'opérations de primitives de programme qui réalisent collectivement la première opération ; et/ou la combinaison de deux opérations de programme ou plus dans le programme en une opération de primitive de programme qui réalise la combinaison des deux opérations de programme ou plus.

10. Procédé selon l'une quelconque des revendications précédentes, comprenant en outre
le stockage des descriptions matérielles indépendantes du programme pour l'agencement matériel ; et
le mappage d'un deuxième programme avec l'agencement matériel, dans lequel la mise en correspondance du deuxième programme avec l'agencement matériel comprend :
l'analyse du deuxième programme pour générer un ensemble sans chevauchement de mappages entre des groupes d'opérations de primitives de programme adjacentes dans le deuxième programme et des groupes d'étages matériels interconnectés dans l'agencement matériel sur la base des descriptions matérielles indépendantes du programme (104) stockées ; et
la planification des groupes d'opérations de primitives de programme adjacentes dans le deuxième programme selon un ordre d'exécution (106).

11. Procédé selon l'une quelconque des revendications précédentes, comprenant en outre :
l'exécution des groupes mappés d'opérations de primitives de programme adjacentes sur l'agencement matériel.

12. Procédé selon l'une quelconque des revendications précédentes, dans lequel l'agencement matériel est une collection de pipelines matériels.

13. Code lisible par ordinateur configuré pour amener le procédé de l'une quelconque des revendications 1 à 10 à être réalisé lorsque le code est exécuté.

14. Support de stockage lisible par ordinateur sur lequel est codé le code lisible par ordinateur selon la revendication 13.
